(19) Europäisches Patentamt / European Patent Office / Office européen des brevets

(11) **EP 3 855 804 B1**

(12) **EUROPEAN PATENT SPECIFICATION**

(45) Date of publication and mention of the grant of the patent:
**07.02.2024 Bulletin 2024/06**

(21) Application number: **21152865.8**

(22) Date of filing: **22.01.2021**

(51) International Patent Classification (IPC):
**H04W 36/00** (2009.01)

(52) Cooperative Patent Classification (CPC):
**H04W 36/0044**

(54) **SURVIVAL TIME MONITORING AND STATUS TRANSFER FOR TIME SENSITIVE WIRELESS COMMUNICATION**

ÜBERLEBENSZEITÜBERWACHUNG UND STATUSÜBERTRAGUNG FÜR ZEITSENSITIVE DRAHTLOSE KOMMUNIKATION

SURVEILLANCE DU TEMPS DE SURVIE ET TRANSFERT DE STATUT POUR UNE COMMUNICATION SANS FIL SENSIBLE AU TEMPS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.01.2020 US 202062964820 P**

(43) Date of publication of application:
**28.07.2021 Bulletin 2021/30**

(73) Proprietor: **Nokia Technologies Oy**
**02610 Espoo (FI)**

(72) Inventors:
• **Wich, Andreas**
**70565 Stuttgart (DE)**
• **Blume, Oliver**
**70499 Stuttgart (DE)**
• **Gebert, Jens**
**71720 Oberstenfeld (DE)**
• **Bakker, Hajo**
**71735 Eberdingen (DE)**

(74) Representative: **Laine IP Oy**
**Porkkalankatu 24**
**00180 Helsinki (FI)**

(56) References cited:
• **HUAWEI: "IIoT QoS support over NG", 3GPP DRAFT; R3-194051 IIOT QOS SUPPORT OVER NG, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Ljubljana, Slovenia; 20190826 - 20190830 17 August 2019 (2019-08-17), XP051770249, Retrieved from the Internet: URL:http://www.3gpp.org/ftp/tsg_ran/WG3_lu /TSGR3_105/Docs/R3-194051.zip [retrieved on 2019-08-17]**
• **"3rd Generation Partnership Project; Technical Specification Group Services and System Aspects; System architecture for the 5G System (5GS); Stage 2 (Release 16)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. V16.3.0 22 December 2019 (2019-12-22), pages 1-417, XP051840930, Retrieved from the Internet: URL:ftp://ftp.3gpp.org/Specs/archive/23_se ries/23.501/23501-g30.zip 23501-g30.docx [retrieved on 2019-12-22]**

- NOKIA ET AL: "Email discussions summary for enhanced IIoT/URLLC for Release 17", 3GPP DRAFT; RP-192657, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Sitges, Spain; 20191209 - 20191212 2 December 2019 (2019-12-02), XP051834269, Retrieved from the Internet: URL:https://ftp.3gpp.org/tsg_ran/TSG_RAN/TSGR_86/Docs/RP-192657.zip RP-192657.docx [retrieved on 2019-12-02]

**Description**

FIELD:

Some example embodiments may generally relate to mobile or wireless telecommunication systems, such as Long Term Evolution (LTE) or fifth generation (5G) radio access technology or new radio (NR) access technology, or other communications systems. For example, certain embodiments may relate to time sensitive communication (TSC).

BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. A 5G system is mostly built on a 5G new radio (NR), but a 5G (or NG) network can also build on the E-UTRA radio. It is estimated that NR provides bitrates on the order of 10-20 Gbit/s or higher, and can support at least service categories such as enhanced mobile broadband (eMBB) and ultrareliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. The next generation radio access network (NG-RAN) represents the RAN for 5G, which can provide both NR and LTE (and LTE-Advanced) radio accesses. It is noted that, in 5G, the nodes that can provide radio access functionality to a user equipment (i.e., similar to the Node B, NB, in UTRAN or the evolved NB, eNB, in LTE) may be named next-generation NB (gNB) when built on NR radio and may be named next-generation eNB (NG-eNB) when built on E-UTRA radio.

Some prior art is represented by the 3GPP specification documents "HUAWEI: "IIoT QoS support over NG", 3GPP DRAFT; R3-194051, XP051770249," and ""3rd Generation Partnership Project; Technical Specification Group Services and System Aspects; System architecture for the 5G System (5GS); Stage 2 (Release 16)", 3GPP STANDARD TS 23.501,vol. SA WG2, no. V16.3.0 22 December 2019 (2019-12-22), pages 1-417, XP051840930".

SUMMARY

According some aspects, there is provided the subject matter of the independent claims. Some further aspects are defined in the dependent claims. The embodiments that do not fall under the scope of the claims are to be interpreted as examples useful for understanding the disclosure.

In a first aspect thereof the exemplary embodiments of this invention provide an apparatus that comprises means for monitoring communication service availability for at least one time sensitive network application in a system using at least one of survival time state information, time sensitive communication assistance information, and a quality of service profile; and means for selecting link layer configurations based on at least one of the survival time state information, the time sensitive communication assistance information, and the quality of service profile.

In a further aspect thereof the exemplary embodiments of this invention provide an apparatus in the first aspect that further comprises means for receiving a message from a source network node initiating handover of a user equipment wherein the message comprises the survival time state information; and means for determining, based at least on the survival time state information, a required link layer configuration so that the survival time is not exceeded.

In another aspect thereof the exemplary embodiments of this invention provide an apparatus that comprises means for receiving a reconfiguration message from a serving network node to trigger handover to a target network node; means for switching to a new cell of the target network node; and means for transmitting a reconfiguration complete message to the target network node wherein the message comprises a survival time state information for packet delivery status of at least one of sent uplink packets or received downlink packets.

All the previous aspects are associated with time sensitive communications in LTE, 5G or NR communication system, and comprise providing the survival time state information, which comprises at least one of survival timer, survival time end, and survival time state counters, to a target network node.

BRIEF DESCRIPTION OF THE DRAWINGS:

For proper understanding of example embodiments, reference should be made to the accompanying drawings, wherein:

Fig. 1 illustrates an example graph depicting TSC traffic with survival time, according to one example;

Fig. 2 illustrates an example of survival time, communication service status and application layer experience, according to an example;

Fig. 3 illustrates an example block diagram of per user plane function (UPF) based virtual bridge, according to one example;

Fig. 4 illustrates an example timing diagram for TSC packet delivery and its relation to ingress/egress, according to an embodiment;

Fig. 5 illustrates an example signaling diagram, according to an embodiment;

Fig. 6a illustrates an example flow diagram of a method, according to an embodiment;

Fig. 6b illustrates an example flow diagram of a method, according to an embodiment;

Fig. 6c illustrates an example flow diagram of a method, according to an embodiment;

Fig. 7a illustrates an example block diagram of an apparatus, according to an embodiment; and

Fig. 7b illustrates an example block diagram of an apparatus, according to an embodiment.

## DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for survival time monitoring and status transfer for TSC, is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments.

Additionally, if desired, the different functions or procedures discussed below may be performed in a different order and/or concurrently with each other. Furthermore, if desired, one or more of the described functions or procedures may be optional or may be combined. As such, the following description should be considered as illustrative of the principles and teachings of certain example embodiments, and not in limitation thereof.

Industrial communication, such as time sensitive communication (TSC), is one of the new services supported in 3GPP Release 16 for 5G. TSC is a communication service that supports deterministic communication and/or isochronous communication with high reliability and availability. TSC is capable of providing packet transport with quality of service (QoS) characteristics, such as bounds on latency, loss, and reliability, in which end systems and relay/transmit nodes can be strictly synchronized. The 5G system has been extended in 3GPP Release-16 to support TSC.

Some relevant terminology relating to TSC includes: communication service availability (CSA), end-to-end latency, survival time, transfer interval, and update time. CSA refers to the ability of the communication service to perform as required for a given time interval, under given conditions. end-to-end latency is the time to transfer a given piece of information from a source to a destination, measured at the communication interface, from the moment it is transmitted by the source to the moment it is successfully received at the destination. Survival time refers to the time that an application consuming a communication service may continue without an anticipated message. Transfer interval is the time difference between two consecutive transfers of application data from an application via the service interface to 3GPP system. Update time indicates the time interval between any two consecutive messages delivered from the egress (of the communication system) to the application.

Certain embodiments described herein can improve TSC for a service where a survival time is given. Knowledge of the survival time of the application increases the CSA because one or more failed message deliveries within the survival time interval are not considered an unavailability. In some embodiments, survival time may be leveraged to improve the spectral efficiency of the deterministic 5G System (5GS) (e.g., for industrial or nonpublic use cases) to avoid the situation where the 5GS needs to over-provision the packet error rate (PER) targets by assuming that each application has survival time equal to zero, which may result in a significant reduction in system capacity and/or reduction in the communication service reliability.

As one example, when CSA = 1 - 1e-8, and survival time is greater than 0 and known in the 5G system, the 5G system could use a target PER of=1e-3 most of the time, and only if packet errors are detected adjust to PER=1e-8 to avert a failure. In other words, according to this example, the 5G system could use PER=1e-3 for ~99.9% of the time, and PER=1e-8 for ~0.1% of the time. Currently, no mechanisms are specified for how to leverage survival time in RAN and how to monitor packet success status to dynamically select link layer configurations. Table 5.2-1 of 3GPP Technical Specification (TS) 22.104 provides some typical values for the survival time.

Survival time is specified in several uses cases for periodic deterministic communication in 3GPP specifications, but there is currently no solution specified for how the 5GS can make use of the survival time. Certain embodiments are able to address at least this issue.

In some use cases that demand deterministic communication with high reliability, it may be permissible to lose a single or a few consecutive messages without endangering the application. This is captured, as introduced above, by the concept of survival time as the time that an application consuming a communication service may continue without an anticipated message.

For example, if a message is anticipated to be received with a periodicity of $T_p$ at a defined latest point in time, a survival time of $T_s$ would allow for a maximum permissible consecutive loss of m messages according to:

$$\mathrm{m} = \lfloor T_s / T_p \rfloor$$

, with $\lfloor x \rfloor$ denoting the rounding to the greatest integer less than or equal to x, and thus $T_s >= m * T_p$ for the application service to stay available. More than m consecutive losses and the application will consider a communication system unavailability and change into a failsafe state (e.g., a robot moving in safe position and stopping).

A message in the application sense may be an application message, which could be a single Ethernet frame and therefore a QoS flow packet of the Ethernet protocol data unit (PDU) session in the 5GS. In many TSN use cases, message size is small and messages are mapped into one packet data convergence protocol (PDCP) or medium access control (MAC) PDU. However, there may also be cases where messages are segmented into multiple MAC PDUs. For the sake of simplicity, this description may describe mainly the former case, but should be considered to be applicable to both cases.

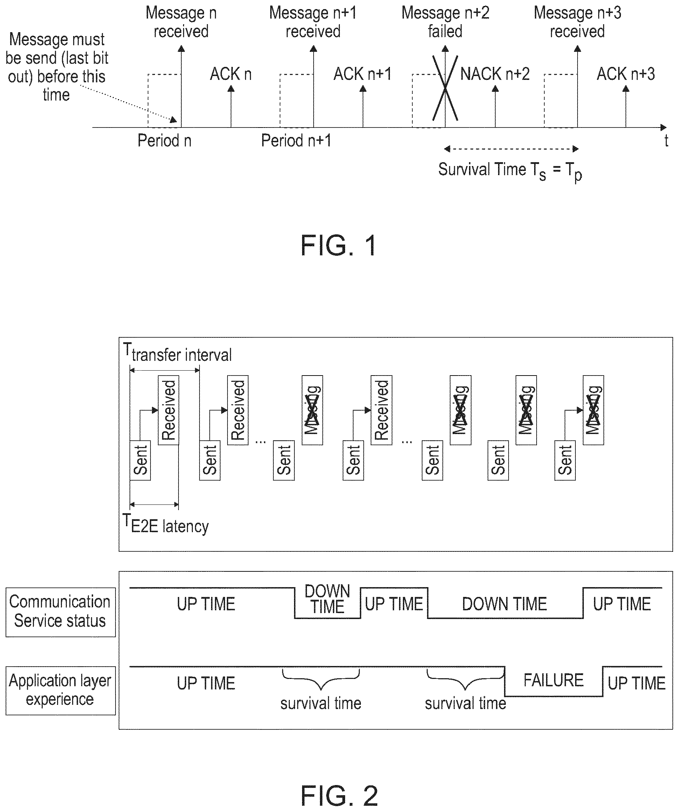

Fig. 1 illustrates an example of the situation where an application message is expected to arrive periodically, with a latest point in time defined before the message is considered lost and counts as a packet error. In this example, the survival time $T_s$ is set to $T_p$ and thus m=1, so one message may be lost, but the service does not fail if the next anticipated message will be received correctly. Thus, the communication service throughout the situation in Fig. 1 would be considered available, in spite of the packet error. Fig. 2 illustrates an example of the communication service status and application layer experience. It should be noted that the 3GPP definition of packet error rate (PER) is independent of the survival time, while the term "communication service availability" has been introduced to 3GPP to include the application level view. Thus, the availability is met if the survival time for the application has not been exceeded, as shown in the example of Fig. 2.

Some problems to be solved in this scenario may include to leverage survival time in RAN for a relaxation of the QoS requirement. In certain embodiments, this may include monitoring of packet delivery status and dynamically adapting the link layer configuration per packet to avoid that the time interval between successful message deliveries exceeds the survival time. This monitoring of packet delivery may be carried out within the serving radio cell. According to some embodiments, since the application is not aware of a UE movement, the above procedure should be extended in case of a handover, i.e., when UEs are switching between NG-RAN cells or nodes. In this case, the handover-target NG-RAN node may be made aware of the packet delivery status.

Time sensitive services were introduced in 3GPP Release-16 with basic support for IEEE TSN or other deterministic applications. With time sensitive communication assistance information (TSCAI), a set of parameters complementary to 5G QoS indicators (5QI) of the QoS model was introduced to describe periodic, deterministic traffic (i.e., PDU transport). TSCAI defines the arrival time of a time critical packet on the 5GS ingress and thus the packet delay budget (PDB) of the respective 5QI QoS profile yields the scheduled time the packet must leave 5GS egress (e.g., in DL UE to application interface and, respectively, in UL user plane function (UPF) to DN interface). TSCAI may be provided from session management function (SMF) to 5G access network (5G-AN), e.g., upon QoS flow establishment. The TSCAI parameters may be set according to corresponding parameters obtained from the application function. Table 1 below illustrates an example of TSCAI.

TABLE 1

| Assistance information | Description |
|---|---|
| Flow Direction | The direction of the TSC flow (uplink or downlink). |
| Periodicity | It refers to the time period between start of two bursts. |
| Burst Arrival time | The arrival time of the data burst at either the ingress of the RAN (downlink flow direction) or egress interface of the UE (uplink flow direction). |

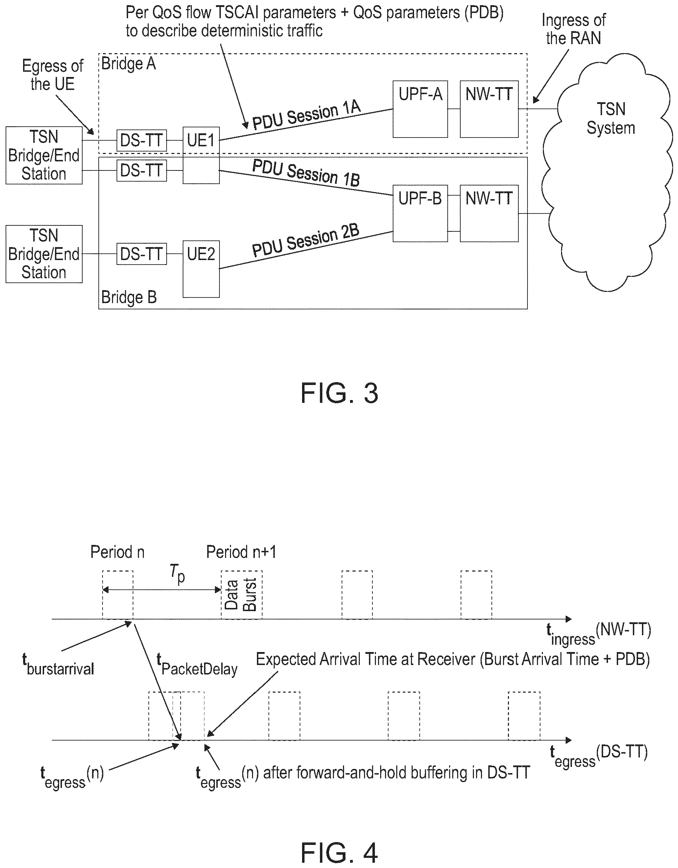

Fig. 3 illustrates an example block diagram of per UPF based virtual bridge, according to one example. The 3GPP architecture model for supporting TSN traffic defines TSN translator functions (TTs) at the border of the 3GPP system. As depicted in the example of Fig. 3, device side TT (DS-TT) is the device side translator (UE-Application IF) and network side TT (NW-TT) is the network side translator (UPF-DN IF). If 5GS is to participate transparently as a bridge in a TSN network, DS-TT and NW-TT can support a hold and forward mechanism to schedule traffic, as defined in IEEE 802.1 Qbv. The hold and forward buffering mechanism allows PDB based 5GS QoS to be used for TSC traffic since packets would only need to arrive at NW-TT or DS-TT egress before their scheduled transmission time.

TSC QoS flows use a delay critical guaranteed bit rate (GBR) resource type, standardized 5QIs and TSCAI. Within each period (defined by periodicity), TSC QoS flows may transmit one burst of maximum size maximum data burst volume (MDBV) within the AN-PDB. Known QoS flow traffic characteristics provided in the TSCAI may be used to optimize scheduling in the 5GS.

The PDB may be explicitly divided into 5G-AN PDB and core network (CN) PDB. The 5G-AN PDB is the packet delay budget applicable to the radio interface, including AN processing. The CN PDB is the delay between a UPF terminating N6 and a 5G-AN. Separate delay budgets may be needed for calculation of expected packet transmit times on 5GS interfaces. Fig. 3 illustrates the 5GS as virtual TSN bridge, with PDU Sessions transporting TSC QoS flows with associated TSCAI parameters.

Fig. 4 illustrates an example TSC transmission timing diagram for TSC packet delivery and its relation to ingress/egress. The arrival of a burst at the RAN ingress (e.g., UPF - DN IF in Fig. 3) is defined by the QoS flows TSCAI, as well as its periodicity $T_p$. The PDB of the flow may be selected in a way so that a defined arrival time can be met exactly. In case that the experienced delay of the packet $t_{PacketDelay}$ is smaller than the packet delay budget $t_{PDB}$, hold-and-forward buffering is applied to deliver the packet at the exact expected arrival time for period n, $t_{egress}(n)$, to the application (via DS-TT). It is noted that the PDB may be split into a core part and an access network part, the 5G-AN PDB. The radio interface therefore delivers the packet within this given 5G-AN PDB (e.g., NG-RAN node ingress to UE egress).

According to certain embodiments, with the assumption that the survival time itself will be available in the 5GS as a QoS parameter (e.g., in the TSCAI), 5GS can dynamically monitor the status of packet delivery with respect to a survival time window since one or more unsuccessful message deliveries. One embodiment may be configured to monitor the failure to deliver packets within the PDB and to define for this a new QoS flow context information. This stateful context information may be applied, for example, to select the link layer parameters for the transmission following a failure. In an embodiment, the state may be maintained close to the air interface, e.g., in the UE or in the gNB (depending on UL and DL direction of packets). Further example embodiments may be configured to handle mobility, which should be transparent to the application. Thus, when a handover occurs, this state information may be transferred to the target gNB.

Therefore, certain embodiments may introduce survival time state (STS) information, e.g., as a PDU session/QoS flow functionality, may leverage the STS in the AN for QoS enhancement, and may introduce STS in the handover context (among QoS Context).

In certain embodiments, the survival time, together with the TSCAI information as described above and the QoS profile (e.g., the PDB value), can be used to characterize and monitor the communication service availability on application level in the 5GS, such as in 5G-RAN nodes. Within a PDU session, QoS flows may be used to transport the PDUs with a given QoS, as specified in the QoS profile of the flow. QoS flows may be identified by QoS flow identifiers (QFI). The QFI may be used to link QoS profile and additional information on the QoS flow, and thus the survival time may also be associated to a QoS flow. The QoS profile for a QFI may also be provided by the SMF via access and mobility management function (AMF) to NG-RAN nodes over the N2 interface, for example.

The QoS flow characteristics (e.g., as defined by 5QI, TSCAI and survival time) describe the QoS flow treatment on the PDU session between UPF and UE. The QoS flow characteristics may be understood as guidelines to set node specific behaviour, e.g., link layer configurations. For TSC traffic, the QoS performance of the 5GS is expected to be strictly monitored and met. Very low packet error rates, as expected by TSN applications, may require robust transmission with low code rate and/or duplications, and therefore a limited spectral efficiency. The survival time concept allows to reduce the effort for most of the messages and to provide better service to critical messages. This increases the system capacity (e.g., the number of served sensors and actors) and reduces the spectrum requirement and system cost. In order to leverage the survival time in this way, the packet losses and their timing relations are of interest. A limited number of messages may be lost as long as at least one message was successfully delivered. This implies that, within a time window equal to the survival time, each lost message increases the urgency of successful delivery of the next message. After m losses the next message must not be lost. Thus, according to certain embodiments, 5GS/NG-RAN can monitor losses to introduce a dynamic state change for the targeted message delivery reliability. This dynamic state context information may be introduced or provided to the 5GS/NG-RAN nodes. It is noted that the distribution of the 5GS internal system clock as well as a gPTP based clock (e.g., application domain clock, TSN clock) and their relation has been introduced into the 5GS in Release-16 to enable synchronized time relations.

According to certain embodiments, the survival time requirement of industrial control applications may be provided as a time interval. Given the message periodicity, the survival time can be translated into the form of a count of messages or traffic periods, as described in terms of TSC deterministic traffic TSCAI parameters. For example, where a message is anticipated to be received with a periodicity of $T_p$ (e.g., as shown in Table 1) at a defined latest point in time, a survival time of $T_s$ would allow for a maximum permissible consecutive loss of m messages according to:

$$\mathrm{m} = \lfloor T_s / T_p \rfloor$$, with $\lfloor x \rfloor$ denoting the rounding to the greatest integer less than or equal to x, and thus $T_s >= m * T_p$.

In some embodiments, a survival timer, $T_{s,timer}$, may define a countdown timer that is set to the survival time triggered by a message loss and defines the maximum window to successfully deliver a message of the periodic message sequence before the communication service is deemed unavailable. After such successful delivery, the survival timer may be stopped. If the survival timer reaches zero, the communication service is considered unavailable.

According to certain embodiments, the survival time can be related to the transmission time of the messages in the NG-RAN (e.g., on PDCP layer) or the time the message is supposed to have left the 5GS egress (e.g., DS-TT to application). In an embodiment, after receiving a negative acknowledgement (NACK) for a message, the survival timer may be set to the survival time corrected for the time between the expected delivery at the UE egress (DS-TT) or RAN ingress (NW-TT) and the time the survival timer is started according to the following: $T_{PDCPtimedelta}$ = Starting time of Survival Timer - Expected Arrival Time of the Lost Packet. Thus, the survival timer may be set to: $T_{s,timer, PDCP} = T_s - T_{PDCPtimedelta}$. Alternatively, the survival time for a transmission may be expressed (triggered with a packet loss indication to, e.g., PDCP) as an absolute point in time for latest delivery of the next message as the survival time end: $T_{s,end}$ = Expected Arrival Time of the Lost Packet + $T_s$.

In an embodiment, the "expected arrival time of lost packet" for the given period can be calculated from the TSCAI and the feedback from lower layers to the PDCP on the (un)successful delivery of the packet. If the delivery of another packet of this TSC QoS Flow is later than the survival timer end, the service is considered unavailable. The benefit of an absolute time value is that a possible time delay in a handover does not have to be explicitly considered, since the nodes (e.g., NG-RAN nodes) are time synchronized to an absolute global time for the TSC deterministic traffic. Alternatively or additionally, the number of consecutive lost packets may be counted for TSC periodic traffic. According to certain embodiments, the survival time state can be expressed in different ways, e.g., by an up- or down-counter. For example, a survival time state up-counter = consecutive packet loss count, and/or a survival time state down-counter = m - consecutive packet loss count. In the latter example, a survival time state of 0 may indicate the last possible chance to deliver a packet without exceeding the application's survival time. This may also hold for applications without survival capability ($T_s$=0). In this example, when the survival time has been exceeded, the survival time state becomes negative.

Alternatively or additionally, in an embodiment, the state can be expressed as a fraction or percentage of the maximum tolerable packet loss counter. For example, where survival time state % = 100% * consecutive packet loss count / (m - 1) with $\mathrm{m} = \lfloor T_s / T_p \rfloor$. For services without survival time, m = 0 and the survival time state may always be set to 100%.

In this version of the survival time state, the state is zero if the previous packet was successfully received. In an embodiment, this state information may be increased for every PDCP packet that is expected for the periodic TSC traffic but is signaled as error (because of late delivery or data error) to PDCP. The state of 100% indicates that m-1 successive packets have been lost and the next packet may be sent with the lowest possible PER, because there is no further chance to deliver a packet without exceeding the application's survival time. In this example, if the state is larger than 100%, the service is unavailable. It should be noted that, according to certain embodiments, there are other possibilities to express the state. For example, the percentage scale can be inverted, i.e., such that best availability may be expressed as state information 1 or 100% and unavailability as 0 or 0% for example as follows: Survival Time State % = 100% * (m - Consecutive Packet Loss Count) / m.

For some applications, such as audio/visual data, a packet loss within the survival time does not break the application, but nevertheless may impact the user experience. In such applications, a minimum time between packet losses may be used. For this, in certain embodiments, information on "last survival time packet" can be included. This may again be expressed in a time value based on the periodicity value, or a number of periods.

According to certain embodiments, survival time state information, such as the survival timer, survival time end or survival time state counters, can be used when delivering packets from UPF to gNB and/or within RAN to lower layers to express a level of urgency. This survival time state information may be used in PDCP layer to invoke PDCP duplication or multi-connectivity and passed through the stack, preferably to the radio resource management (RRM) and scheduler to select the modulation and coding scheme (MCS). In an embodiment, to carry the information, new information elements may be provided at the interfaces and state machines, e.g., in the UPF or PDCP layer.

Typically, the QoS performance would be monitored by the policy control function (PCF), with information delivered from SMF, AMF and/or UPF. However, for time critical, deterministic traffic, the monitoring should likely occur closer to the radio stack, e.g., in the gNB.

In an embodiment, the acknowledgement of the PDCP message may include information about meeting of the PDB (e.g., NACK if the AN-PDB had not been achieved). As a result, on PDCP layer, the applications requirements become visible.

As introduced above, it has not yet been specified in 3GPP how to monitor the survival state and how to adapt the link configuration to it. Furthermore, UE mobility introduces an additional problem in which, during handover, undelivered messages or PDCP packets may be forwarded from the source gNB buffer to the target gNB. However, currently, there is no transfer of the time of last successful packet delivery or survival state information. Therefore, after a handover, the RAN may lose the state information if the information is stored in the gNB. Certain embodiments may address this issue by providing for survival time state information transfer on handover.

For example, in an embodiment, at least the target gNB may be informed by a new information element about the remaining time for the next successful transmission in terms of survival time end or a survival time state counter. The format of the information transfer may depend on the synchronization of the base stations (e.g., gNBs) and the scheduling scheme.

In one embodiment, for a fully synchronized system, the survival time end may contain the full information together with the 5QI QoS and TSCAI. The target gNB may then deduce the urgency and required link layer configuration so that survival time is not exceeded. According to an embodiment, in case of semi-persistent scheduling (SPS), the survival time end can be used to select a slot that is suited to maintain the PDB and receive the messages exactly at the expected deterministic timing (or shortly before when using the hold-and-forward-buffer).

In a further embodiment, if the gNBs are not synchronized, it may not be meaningful to forward a survival time end. Nevertheless, the survival time state may provide an indication of the level of urgency and thus for the configuration of the link layer.

When a handover latency occurs, this may hinder the target gNB from transmitting at the next due transmission time, creating additional packet loss to the application. In an embodiment, this latency may be added on top of the transferred survival time state counter.

According to some embodiments, for UL flows, the survival time state information may be maintained or stored in the UE. Nevertheless, the information may be transferred to the target gNB because the UE may need transmission grants and the timing requirement and the MCS of the grants may depend on the survival time state or survival time end.

According to certain embodiments, in case of a handover between NG-RAN nodes, QoS context may also be transferred from the serving gNB to the target network node (e.g., gNB or eNB). To this QoS context, in an embodiment, the above-mentioned dynamic state information on survival time may be added, e.g., in order to support deterministic traffic and allow for dynamic adaptation. According to an embodiment, this information may be added as one or more information element(s) within the HANDOVER REQUEST message in the handover procedure (e.g., via Xn or NG). It is noted that, additionally in an embodiment, the TSCAI information may be transferred between the gNBs in case of handover.

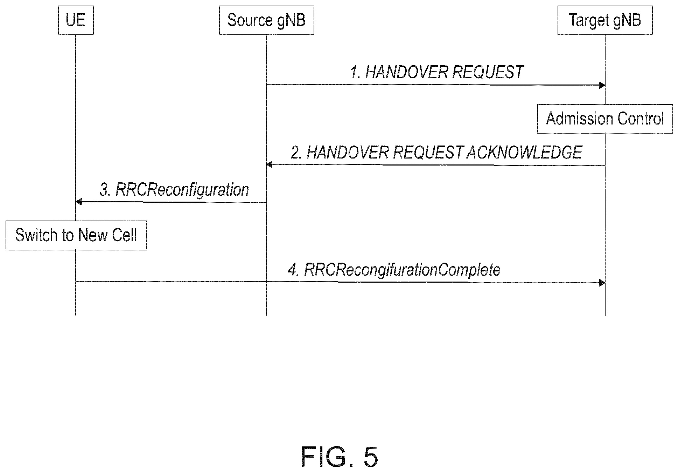

Fig. 5 illustrates an example signaling diagram depicting the inter-gNB handover procedure, according to certain embodiments. As illustrated in the example of Fig. 5, at 1, the HANDOVER REQUEST message may be sent from the source gNB to target gNB to request the preparation of resources. In an embodiment, the HANDOVER REQUEST message may include a new information element (IE), such as a PDU Session Resources To Be Setup List, that contains an item per PDU session, PDU Session Resources To Be Setup Item. Each of these items may contain the QoS Flows To Be Setup List, which itself has one item per QoS flow: QoS Flows To Be Setup Item. These items may contain, among other elements, the QCI and the QoS Flow Level QoS Parameters IE. For GBR QoS flows, this IE may also contain the GBR QoS Flow Information with detailed information on the QoS parameters like the guaranteed flow bitrate uplink/downlink. Alternatively, in an embodiment, the information may be exchanged from the source to target gNB via the UPF.

Furthermore, the IE included in the HANDOVER REQUEST may also contain the additional survival time state information for the respective TSC QoS flow. Additionally, in an embodiment, the IE may also include the TSCAI, which may also be transferred in the HANDOVER REQUEST message and thus added to it. Table 2 below illustrates an example of the GBR QoS flow information with added TSCAI & survival time state information, according to one example embodiment.

TABLE 2

| IE/Group Name | Presence | Range | IE type and reference | Semantics description |
|---|---|---|---|---|
| Maximum Flow Bit Rate Downlink | M | | Bit Rate 9.2.3.4 | Maximum Bit Rate in DL. Flow Bit Rates are specified in TS 23.501 [7]. |

8

(continued)

| IE/Group Name | Presence | Range | IE type and reference | Semantics description |
|---|---|---|---|---|
| Maximum Flow Bit Rate Uplink | M | | Bit Rate 9.2.3.4 | Maximum Bit Rate in UL. Flow Bit Rates are specified in TS 23.501 [7]. |
| Guaranteed Flow Bit Rate Downlink | M | | Bit Rate 9.2.3.4 | Guaranteed Bit Rate (provided that there is data to deliver) in DL. Flow Bit Rates are specified in TS 23.501 [7]. |
| Guaranteed Flow Bit Rate Uplink | M | | Bit Rate 9.2.3.4 | Guaranteed Bit Rate (provided that there is data to deliver). Flow Bit Rates are specified in TS 23.501 [7]. |
| Notification Control | O | | ENUMERATE D (notification requested, ...) | Notification control is specified in TS 23.501 [7] |
| Maximum Packet Loss Rate Downlink | O | | Packet Loss Rate 9.2.3.11 | Indicates the maximum rate for lost packets that can be tolerated in the downlink direction. Maximum Packet Loss Rate is specified in TS 23.501 [7]. |
| Maximum Packet Loss Rate Uplink | O | | Packet Loss Rate 9.2.3.11 | Indicates the maximum rate for lost packets that can be tolerated in the uplink direction. Maximum Packet Loss Rate is specified in TS 23.501 [7], |
| TSCAI* | O | | | |
| Survival Time State Information | O | | | |

In UL direction, the survival time end or survival time status counters may not be available in the source gNB, but rather in the UE. In this case, according to an embodiment, the information may be transferred to the target gNB, at 4, in the RRC Reconfiguration Complete Message.

In one embodiment, a time critical handover clause may be included within the HANDOVER REQUEST message, e.g., as shown in Table 3 below. According to an embodiment, a new cause value of "Time Sensitive Communication Handover" may also be included in the HANDOVER REQUEST message indicating a request for a dedicated scheduling of the next message or for the forwarded PDCP packet within a dedicated time limit.

TABLE 3

| Time Critical Handover | Handover is requested for time critical reason i.e. this cause value is reserved to represent all critical cases where the connection is likely to be dropped if handover is not performed. |
|---|---|

It is noted that, while some embodiments described herein may assume periodic messages that are delivered by a single PDCP packet, example embodiments may be applied to larger messages that are fragmented into several PDCP packets. However, in this case, the counters may need to consider receiving status of all PDCP packets of a message for changing the survival time interval, end or state. Furthermore, in certain embodiments, monitoring of packet delivery status may be taken at a different level in the RAN stack, e.g., at UPF, SDAP, MAC, etc.

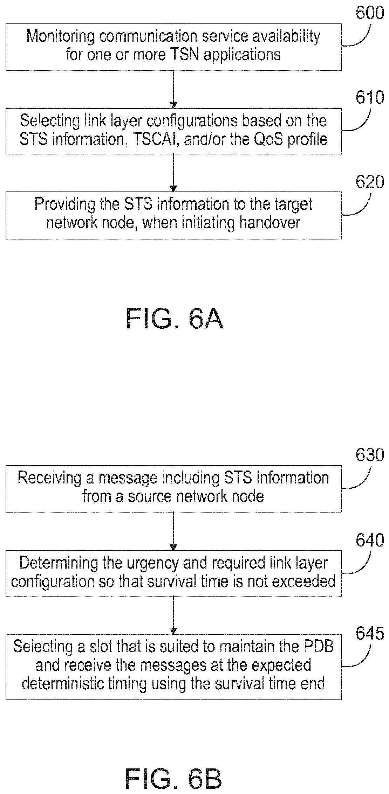

Fig. 6a illustrates an example flow diagram of a method for monitoring communication service availability for application(s), such as TSN application(s) in a 5GS, according to one example embodiment. In an example embodiment, the flow diagram of Fig. 6a may be performed by a network entity or network node associated with a communication system, such as LTE or 5G NR. For instance, in some example embodiments, the network node performing the method of Fig. 6a may include a base station, eNB, gNB, and/or NG-RAN node. In one example embodiment, the method of Fig. 6a may be performed by a source gNB, such as that illustrated in Fig. 5.

As illustrated in the example of Fig. 6a, the method may include, at 600, monitoring communication service availability for one or more TSN applications in a 5GS using at least one of STS information, TSCAI, and/or a QoS profile. In certain embodiments, the STS information may include survival time, survival timer, survival time end, and/or survival time state counters, for example. According to an embodiment, the QoS profile may include 5QI and/or a PDB value. As discussed in detail above, in certain embodiments, the survival time, the TSCAI and the QoS profile (e.g., the PDB value), can be used to characterize and monitor the communication service availability on the application level in the 5GS, such as in the 5G-RAN nodes. For example, in an embodiment, the monitoring 600 may include dynamically monitoring the status of packet delivery with respect to the survival time since a previous unsuccessful packet delivery. In one embodiment, the STS information (e.g., survival time, survival timer, survival time end, and/or survival time state counters) may be included as an additional parameter within the TSCAI information element provided to RAN (e.g., to the gNB or target gNB). In another embodiment, the STS information (e.g., survival time, survival timer, survival time end, and/or survival time state counters) may be provided as a separate parameter or information element from the TSCAI.

In one embodiment, the QoS profile of a QoS flow may specify the QoS that should be used to transport the PDUs within a PDU session. QoS flows may be identified by a QFI that can be used to link a QoS profile with additional information on the QoS flow. In an embodiment, the survival time may also be associated with a QoS flow. According to some embodiments, the method may include receiving the QoS profile for a QFI from a SMF via an AMF over the N2 interface, for example.

In an embodiment, the method of Fig. 6a may also include, at 610, selecting link layer configurations based on the at least one of the STS information, TSCAI, and/or the QoS profile. The QoS flow characteristics, as defined by the STS information, TSCAI and QoS profile, determine the QoS flow treatment on the PDU session between a UPF and UE. In other words, the QoS flow characteristics may be understood as rules or guidelines to select node specific behaviour, e.g., the link layer configurations.

As introduced above, for TSC traffic, the QoS performance of the 5GS may need to be strictly monitored and met. Low packet error rates, such as that needed by TSN applications, may require robust transmission with low code rate and/or duplications, and therefore a limited spectral efficiency. The use of survival time allows for a reduction in effort for most of the packets and may provide better service to critical packets or messages. Therefore, in an embodiment, the monitoring 600 may include monitoring the packet losses over a certain time window. Since a limited number of packets may be lost as long as at least one packet was successfully delivered, within a time window equal to the survival time, each lost message increases the urgency of successful delivery of the next message. After $m$ packet losses the next packet should be successfully received. It is noted that synchronized time relations between nodes in the 5GS may be enabled by the distribution of the 5GS internal system clock and/or a gPTP based clock and their relation.

As mentioned above, in some embodiments, the STS information may include a survival time, survival timer, survival time end, and/or survival time state counters, for example. According to certain embodiments, given the packet periodicity, the monitoring 600 may include translating a survival time into the form of a count of packets or traffic periods, as described in terms of TSC deterministic traffic TSCAI parameters. For example, where a message is anticipated to be received with a periodicity of $T_p$ (e.g., as shown in Table 1) at a defined latest point in time, a survival time of $T_s$ would allow for a maximum permissible consecutive loss of $m$ messages according to: $m = \lfloor T_s \, / \, T_p \, \rfloor$, with $\lfloor x \rfloor$ denoting the rounding to the greatest integer less than or equal to x, and therefore the survival time may be: $T_s >= m * T_p$.

In some embodiments, a survival timer, $T_{s,timer}$, may define a countdown timer that is set to the survival time triggered by a message loss. According to an embodiment, the survival timer may define the maximum window to successfully deliver a packet of the periodic message sequence before the communication service is considered unavailable. In other words, the window for successfully delivering a packet is during the time that the survival timer is running. After such successful delivery of a packet, the survival timer may be stopped. If the survival timer reaches zero, then the communication service is considered unavailable. Therefore, according to an embodiment, the monitoring 600 may include starting a survival timer, stopping the survival timer when a packet is successfully delivered or considering the communication service as unavailable when the survival timer reaches zero.

According to certain embodiments, the survival time may be related to the transmission time of the packets in the NG-RAN (e.g., on PDCP layer) or the time the packet is supposed to have left the 5GS egress (e.g., DS-TT to an application). In an embodiment, after receiving a negative acknowledgement (NACK) for a packet, the method may include setting the survival timer to the survival time corrected for the time between the expected delivery at the UE egress (DS-TT) or RAN ingress (NW-TT) and setting the time that the survival timer is started according to the following: $T_{PDCPtimedelta}$ = Starting time of Survival Timer - Expected Arrival Time of the Lost Packet. Thus, the method may include setting the survival timer to: $T_{s,timer,\,PDCP} = T_s - T_{PDCPtimedelta}$. In a further embodiment, the method may include expressing the survival time for a transmission (triggered with a packet loss indication to, e.g., PDCP) as an absolute point in time for latest delivery of the next message as the survival time end: $T_{s,end}$ = Expected Arrival Time of the Lost Packet + $T_s$.

In an embodiment, the "expected arrival time of lost packet" for the given period can be calculated from the TSCAI and the feedback from lower layers to the PDCP on the (un)successful delivery of the packet. If the delivery of another packet of this TSC QoS flow is later than the survival timer end, the service is considered unavailable. Alternatively or additionally, the number of consecutive lost packets may be counted for TSC periodic traffic.

According to certain embodiments, a survival time state may be expressed, for example, as an up-counter or down-counter. For instance, a survival time state up-counter = consecutive packet loss count, and/or a survival time state down-counter = $m$ - consecutive packet loss count. In the latter example, a survival time state of zero may indicate the last possible chance to deliver a packet without exceeding the application's survival time. Alternatively or additionally, in an embodiment, the survival time state may be expressed as a fraction or percentage of the maximum tolerable packet loss counter. For example, where survival time state % = 100% * consecutive packet loss count / (m - 1) with $\mathrm{m}= \lfloor T_s / T_p \rfloor$. For applications without survival time, m = 0 and the survival time state may always be set to 100%. In this version of the survival time state, the state is zero if the previous packet was successfully received. In an embodiment, the method may include increasing the survival time state for every PDCP packet that is expected for periodic TSC traffic but is signaled as error (because of late delivery or data error) to PDCP. A state of 100% indicates that m-1 successive packets have been lost and the next packet may be sent with the lowest possible PER, because there is no further chance to deliver a packet without exceeding the application's survival time. In this example, if the state is larger than 100%, the service is considered unavailable.

In certain embodiments, a minimum time between packet losses may be used. For this, in certain embodiments, STS information may include information on "last survival time packet". As an example, this may be expressed in a time value based on the periodicity value, or a number of periods.

According to some embodiments, the method may include using the STS information, such as the survival timer, survival time end or survival time state counters, when delivering packets from UPF to gNB and/or within RAN to lower layers to express a level of urgency. For example, this STS information may be used in PDCP layer to invoke PDCP duplication or multi-connectivity and passed through the stack, such as to the radio resource management (RRM) and scheduler to select the MCS. In an embodiment, the method may include carrying the STS information via new information elements that may be provided at the interfaces and state machines, e.g., in the UPF or PDCP layer. In an embodiment, the method may include receiving an acknowledgement of receipt of a packet, which may also include information about meeting of the PDB (e.g., NACK if the AN-PDB had not been achieved).

In some embodiments, the method of Fig. 6a may also include, at 620, when initiating a handover of a UE to a target network node (e.g., target gNB), providing the STS information to the target network node. For example, in an embodiment, the providing 620 may include informing at least the target network node using a new information element about the remaining time for the next successful transmission in terms of survival time end or a survival time state counter. In one embodiment, the format of the providing procedure 620 may depend on the synchronization of the network nodes (e.g., gNBs) and the scheduling scheme. For example, in an embodiment, the providing 620 may include providing the STS information as an additional parameter within the TSCAI information element provided to the target network node. In another embodiment, the providing 620 may include providing the STS information as a separate parameter or information element from the TSCAI and/or other QoS parameter.

According to an embodiment, for a fully synchronized system, the survival time end may contain the full information together with the 5QI QoS and TSCAI. The target network node may then deduce the urgency and required link layer configuration so that survival time is not exceeded. According to an embodiment, in case of SPS, the survival time end can be used to select a slot that is suited to maintain the PDB and receive the messages exactly at the expected deterministic timing (or shortly before when using the hold-and-forward-buffer). In another embodiment, if the network nodes are not synchronized then it may not be meaningful to forward a survival time end, but the STS information may still provide an indication of the level of urgency and thus for the configuration of the link layer.

When a handover latency occurs, this may hinder the target network node from transmitting at the next due transmission time, creating additional packet loss to the application. In an embodiment, the providing 620 may include providing this handover latency to be added on top of the provided survival time state counter.

According to certain embodiments, in case of a handover between network nodes, the providing 620 may also include transferring QoS context to the target network node. To this QoS context, in an embodiment, the above-mentioned dynamic state information on survival time may be added, e.g., in order to support deterministic traffic and allow for dynamic adaptation. According to an embodiment, the providing 620 may include providing this information in one or more information element(s) within a HANDOVER REQUEST message in a handover procedure (e.g., via Xn or NG). Additionally, in an embodiment, the providing 620 may further include transferring the TSCAI information in the information element(s) to the target network node in case of handover.

In an embodiment, the information element(s) may include a PDU Session Resources To Be Setup List, that contains an item per PDU session, PDU Session Resources To Be Setup Item. Each of these items may contain the QoS Flows To Be Setup List, which itself has one item per QoS flow: QoS Flows To Be Setup Item. These items may contain, among other elements, the QCI and the QoS Flow Level QoS Parameters IE. For GBR QoS flows, this IE may also contain the GBR QoS Flow Information with detailed information on the QoS parameters like the guaranteed flow bitrate uplink/downlink. Alternatively, in an embodiment, the information may be exchanged from to the target network node via the UPF. Furthermore, in one embodiment, the IE included in the HANDOVER REQUEST may also contain the additional survival time state information for the respective TSC QoS flow. Additionally, in an embodiment, the IE may also include the TSCAI, which may also be transferred in the HANDOVER REQUEST message and thus added to it.

Fig. 6b illustrates an example flow diagram of a method for selecting link layer configurations for TSC in a system, such as 5GS, according to one example embodiment. In an example embodiment, the flow diagram of Fig. 6b may be performed by a network entity or network node associated with a communication system, such as LTE or 5G NR. For instance, in some example embodiments, the network node performing the method of Fig. 6b may include a base station, eNB, gNB, and/or NG-RAN node, such as the target gNB illustrated in Fig. 5.

As illustrated in the example of Fig. 6b, the method may include, at 630, receiving a message, for example from a source network node initiating handover of a UE, which includes STS information. As discussed above, in certain embodiments, the STS information may include survival time, survival timer, survival time end, and/or survival time state counters, for example. For example, in an embodiment, the receiving 630 may include receiving a new information element about the remaining time for the next successful transmission in terms of survival time end or a survival time state counter. In one embodiment, the format of the message received at 630 may depend on the synchronization of the network nodes (e.g., gNBs) and the scheduling scheme. According to an embodiment, for a fully synchronized system, the message received at 630 may include the STS information together with the 5QI QoS and/or TSCAI. For example, in an embodiment, the receiving 630 may include receiving the STS information as an additional parameter within the TSCAI information element received from the source network node. In another embodiment, the receiving 630 may include receiving the STS information as a separate parameter or information element from the TSCAI, 5QI QoS and/or other QoS parameter. In another embodiment, the receiving 630 may include receiving a handover latency, which may be added on top of the provided survival time state counter.

According to certain embodiments, in case of a handover of the UE from the source network node, the receiving 630 may also include receiving QoS context from the source network node. To this QoS context, in an embodiment, the above-mentioned dynamic state information on survival time may be added, e.g., in order to support deterministic traffic and allow for dynamic adaptation. According to an embodiment, the receiving 630 may include receiving this information in one or more information element(s) within a HANDOVER REQUEST message in a handover procedure (e.g., via Xn or NG). Additionally, in an embodiment, the receiving 630 may further include receiving the TSCAI information in the information element(s) from the source network node in case of handover.

In an embodiment, the information element(s) may include a PDU Session Resources To Be Setup List, that contains an item per PDU session, PDU Session Resources To Be Setup Item. Each of these items may contain the QoS Flows To Be Setup List, which itself has one item per QoS flow: QoS Flows To Be Setup Item. These items may contain, among other elements, the QCI and the QoS Flow Level QoS Parameters IE. For GBR QoS flows, this IE may also contain the GBR QoS Flow Information with detailed information on the QoS parameters like the guaranteed flow bitrate uplink/downlink. Alternatively, in an embodiment, the information may be exchanged from to the target network node via the UPF. Furthermore, in one embodiment, the IE included in the HANDOVER REQUEST may also contain the additional survival time state information for the respective TSC QoS flow. Additionally, in an embodiment, the IE may also include the TSCAI, which may also be transferred in the HANDOVER REQUEST message.

In an embodiment, the method of Fig. 6b may then include, at 640, determining, based on the received information, the urgency and required link layer configuration so that survival time is not exceeded. According to an embodiment, for example in case of SPS, the method may include, at 645, selecting a slot that is suited to maintain the PDB and receive the messages at the expected deterministic timing (or shortly before when using the hold-and-forward-buffer) using the survival time end. In another embodiment, if the network nodes are not synchronized, the received STS information may still provide an indication of the level of urgency and thus for the configuration of the link layer. For example, in an embodiment, the level of urgency may be used to perform possible actions or determine whether to perform certain actions, such as configuring MCS, duplication, retransmission, etc.

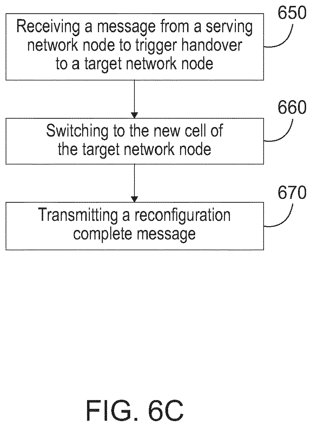

Fig. 6c illustrates an example flow diagram of a method for monitoring communication service availability for application(s), such as TSN application(s) in a 5GS, according to one example embodiment. In certain example embodiments, the flow diagram of Fig. 6c may be performed by a network entity or network node associated with a communications system, such as LTE or 5G NR. For instance, in some example embodiments, the network entity performing the method of Fig. 6c may be a UE, mobile station, IoT device, or the like. In one example embodiment, the method of Fig. 6c may be performed by the UE illustrated in Fig. 5, for instance.

In an embodiment, the method of Fig. 6c may include, at 650, receiving a message from a serving network node to trigger handover to a target network node. According to one example, the message may include a RRC reconfiguration message. The method may then include, at 660, switching to the new cell of the target network node. In an embodiment, the method may also include, at 670, transmitting a reconfiguration complete (e.g., RRCReconfiguration-

Complete message) to the target network node. In certain embodiments, the STS information may be maintained or stored at the UE. In this case, the transmitting 670 may include providing the STS information, such as the survival time end and/or survival time status counters, to the target network node.

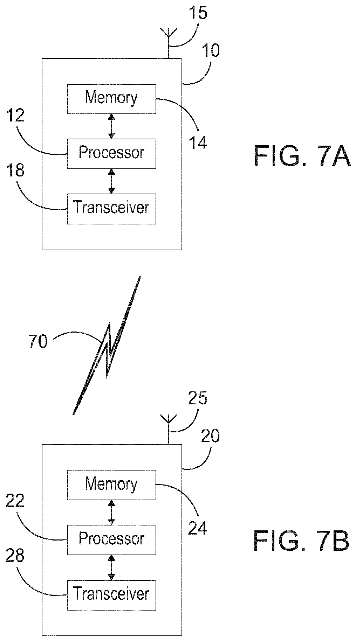

Fig. 7a illustrates an example of an apparatus 10 according to an embodiment. In an embodiment, apparatus 10 may be a node, host, or server in a communications network or serving such a network. For example, apparatus 10 may be a satellite, base station, a Node B, an evolved Node B (eNB), 5G Node B or access point, next generation Node B (NG-NB or gNB), and/or WLAN access point, associated with a radio access network, such as a LTE network, 5G or NR. In example embodiments, apparatus 10 may be or may include a NG-RAN node, an eNB in LTE, gNB in 5G, or the like. For instance, in one embodiment, apparatus 10 may correspond to the source gNB and/or target gNB illustrated in Fig. 5.

It should be understood that, in some example embodiments, apparatus 10 may be comprised of an edge cloud server as a distributed computing system where the server and the radio node may be stand-alone apparatuses communicating with each other via a radio path or via a wired connection, or where they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. It should be noted that one of ordinary skill in the art would understand that apparatus 10 may include components or features not shown in Fig. 7a.

As illustrated in the example of Fig. 7a, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), applicationspecific integrated circuits (ASICs), and processors based on a multi-core processor architecture, as examples. While a single processor 12 is shown in Fig. 7a, multiple processors may be utilized according to other example embodiments. For example, it should be understood that, in certain embodiments, apparatus 10 may include two or more processors that may form a multiprocessor system (e.g., in this case processor 12 may represent a multiprocessor) that may support multiprocessing. In some embodiments, the multiprocessor system may be tightly coupled or loosely coupled (e.g., to form a computer cluster).

Processor 12 may perform functions associated with the operation of apparatus 10, which may include, for example, preceding of antenna gain/phase parameters, encoding and decoding of individual bits forming a communication message, formatting of information, and overall control of the apparatus 10, including processes related to management of communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15. In certain embodiments, the radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and/or the like. According to an example embodiment, the radio interface may include components, such as filters, converters (for example, digital-to-analog converters and the like), mappers, a Fast Fourier Transform (FFT) module, and/or the like, e.g., to generate symbols for transmission via one or more downlinks and to receive symbols (for example, via an uplink).

As such, transceiver 18 may be configured to modulate information on to a carrier waveform for transmission by the antenna(s) 15 and demodulate information received via the antenna(s) 15 for further processing by other elements of apparatus 10. In other example embodiments, transceiver 18 may be capable of transmitting and receiving signals or data directly. Additionally or alternatively, in some embodiments, apparatus 10 may include an input and/or output device (I/O device).

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry or control circuitry. In addition, in some embodiments, transceiver 18 may be included in or may form a part of transceiver circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to case an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be a network node or RAN node, such as a base station, access point, Node B, eNB, gNB, WLAN access point, or the like. For example, in some embodiments, apparatus 10 may be configured to perform one or more of the processes depicted in any of the flow charts or signaling diagrams described herein, such as those illustrated in Fig. 5, Fig. 6a, Fig. 6b, and/or Fig. 6c. In some embodiments, as discussed herein, apparatus 10 may be configured to perform a procedure relating to monitoring communication service availability for application(s), such as TSN application(s) in a 5GS.

In one embodiment, apparatus 10 may be a current or source network node (e.g., gNB). According to this embodiment, apparatus 10 may be controlled by memory 14 and processor 12 to monitor communication service availability for one or more TSN applications in a 5GS using at least one of STS information, TSCAI, and/or a QoS profile. In an embodiment, apparatus 10 may be controlled by memory 14 and processor 12 to select link layer configurations based on the at least one of the STS information, TSCAI, and/or the QoS profile.

According to one embodiment, the STS information may include survival time, survival timer, survival time end, and/or survival time state counters, for example. In an embodiment, the QoS profile may include 5QI and/or a PDB value. In some embodiments, the monitoring may include using the survival time, the TSCAI and the QoS profile (e.g., the PDB value), to characterize the communication service availability on the application level in the 5GS. In a variant, the monitoring may include dynamically monitoring the status of packet delivery with respect to the survival time window since a previous unsuccessful packet delivery.

According to an embodiment, given a packet periodicity, apparatus 10 may be controlled by memory 14 and processor 12 to translate a survival time into the form of a count of packets or traffic periods, as described in terms of TSC deterministic traffic TSCAI parameters. In an embodiment, where a message is anticipated to be received with a periodicity of $T_p$ at a defined latest point in time, a survival time of $T_s$ would allow for a maximum permissible consecutive loss of $m$ messages according to: $m = \lfloor T_s / T_p \rfloor$, with LvJ denoting the rounding to the greatest integer less than or equal to x, and therefore the survival time may be: $T_s >= m * T_p$.

In some embodiments, a survival timer, $T_{s,timer}$, may define a countdown timer that is set to the survival time triggered by a packet loss. According to an embodiment, the survival timer may define the maximum window to successfully deliver a packet of the periodic message sequence before the communication service is considered unavailable. In an embodiment, after such successful delivery of a packet, apparatus 10 may be controlled by memory 14 and processor 12 to stop the survival timer. According to an embodiment, when the survival timer reaches zero, then apparatus 10 may be controlled by memory 14 and processor 12 to consider the communication service unavailable. Therefore, according to an embodiment, apparatus 10 may be controlled by memory 14 and processor 12 to start a survival timer, stop the survival timer when a packet is successfully delivered or to consider the communication service as unavailable when the survival timer reaches zero.

In an embodiment, after receiving a negative acknowledgement (NACK) for a packet, apparatus 10 may be controlled by memory 14 and processor 12 to set the survival timer to the survival time corrected for the time between the expected delivery at the UE egress (DS-TT) or RAN ingress (NW-TT) and to set the time that the survival timer is started according to the following formula: $T_{PDCPtimedelta}$ = Starting time of Survival Timer - Expected Arrival Time of the Lost Packet. Thus, in some embodiments, apparatus 10 may be controlled by memory 14 and processor 12 to set the survival timer to: $T_{s,timer, PDCP} = T_s - T_{PDCPtimedelta}$. In a further embodiment, apparatus 10 may be controlled by memory 14 and processor 12 to express the survival time for a transmission as an absolute point in time for latest delivery of the next message as the survival time end: $T_{s,end}$ = Expected Arrival Time of the Lost Packet + $T_s$.

In an embodiment, apparatus 10 may be controlled by memory 14 and processor 12 to calculate the expected arrival time of a lost packet for a given period from the TSCAI and the feedback from lower layers to the PDCP on the unsuccessful delivery of the packet. According to an embodiment, when the delivery of another packet of this TSC QoS flow is later than the survival timer end, the service is considered unavailable. Alternatively or additionally, in a variant, the number of consecutive lost packets may be counted for TSC periodic traffic.

According to certain embodiments, apparatus 10 may be controlled by memory 14 and processor 12 to express a survival time state, for example, as an up-counter or down-counter. For instance, in an embodiment, apparatus 10 may be controlled by memory 14 and processor 12 to set a survival time state up-counter to be equal to consecutive packet loss count, and/or to set a survival time state down-counter to be equal to $m$ - consecutive packet loss count. In another embodiment, the survival time state may be expressed as a fraction or percentage of the maximum tolerable packet loss counter.

In certain embodiments, a minimum time between packet losses may be used where, for example, STS information may include information on last survival time packet. In one embodiment, this minimum time may be expressed as a time value based on the periodicity value or a number of periods.

According to certain embodiments, apparatus 10 may be controlled by memory 14 and processor 12 to use the STS information, such as the survival timer, survival time end or survival time state counters, when delivering packets from a UPF to a gNB and/or within RAN to lower layers to express a level of urgency. For example, in an embodiment, the level of urgency may be used to perform possible actions or determine whether to perform certain actions, such as configuring MCS, duplication, retransmission, etc. In an embodiment, apparatus 10 may be controlled by memory 14 and processor 12 to transmit the STS information via new information elements that may be provided at the interfaces and state machines, e.g., in the UPF or PDCP layer. In one embodiment, apparatus 10 may be controlled by memory 14 and processor 12 to receive an acknowledgement of receipt of a packet, which may also include information about meeting of the PDB.

In some embodiments, apparatus 10 may be controlled by memory 14 and processor 12 to, for example when initiating a handover of a UE to a target network node, provide the STS information to the target network node. For example, in an embodiment, apparatus 10 may be controlled by memory 14 and processor 12 to inform at least the target network node using a new information element about the remaining time for the next successful transmission in terms of a survival time end or a survival time state counter. In one embodiment, the format of the provision of information to the target network node may depend on the synchronization of the network nodes and the scheduling scheme. For example, in an embodiment, the STS information may be provided as an additional parameter within the TSCAI information element provided to the target network node. In another embodiment, the STS information may be provided as a separate parameter or information element from the TSCAI and/or other QoS parameter.

According to an embodiment, for a fully synchronized system, the survival time end may contain the full information together with the 5QI QoS and TSCAI. In an embodiment, apparatus 10 may be controlled by memory 14 and processor 12 to provide a handover latency to be added on top of the provided survival time state counter.

According to certain embodiments, in case of a handover, apparatus 10 may be controlled by memory 14 and processor 12 to transfer QoS context to the target network node. In some embodiments, apparatus 10 may be controlled by memory 14 and processor 12 to add, to the QoS context, the state information on survival time. According to one embodiment, apparatus 10 may be controlled by memory 14 and processor 12 to provide the information in one or more information element(s) within a HANDOVER REQUEST message in a handover procedure. Additionally, in a variant, apparatus 10 may be controlled by memory 14 and processor 12 to transfer the TSCAI information in the information element(s) to the target network node in case of handover.

In an embodiment, the information element(s) may include a PDU Session Resources To Be Setup List, that contains an item per PDU session, PDU Session Resources To Be Setup Item. According to a variant, each of these items may contain, among other elements, the QCI and the QoS flow level QoS parameters IE and, for GBR QoS flows, the IE may also contain the GBR QoS flow information with detailed information on the QoS parameters like the guaranteed flow bitrate uplink/downlink. In a further embodiment, the IE included in the HANDOVER REQUEST may also contain the additional survival time state information for the respective TSC QoS flow. Additionally, in an embodiment, the IE may also include the TSCAI, which may also be transferred in the HANDOVER REQUEST message.

In another embodiment, apparatus 10 may be a target network node (e.g., gNB). According to this embodiment, apparatus 10 may be controlled by memory 14 and processor 12 to receive a message, for example, from a source gNB initiating handover of a UE. The message may include at least STS information. According to one embodiment, apparatus 10 may be controlled by memory 14 and processor 12 to determine, based at least on the received STS information, the urgency and required link layer configuration so that survival time is not exceeded. In an embodiment, the STS information may include survival time, survival timer, survival time end, and/or survival time state counters, for example.

According to an embodiment, apparatus 10 may be controlled by memory 14 and processor 12 to receive a new information element about the remaining time for the next successful transmission in terms of survival time end or a survival time state counter. In an embodiment, for a fully synchronized system, the message may include the STS information together with the 5QI QoS and/or TSCAI. In another embodiment, apparatus 10 may be controlled by memory 14 and processor 12 to receive a handover latency, which may be added on top of the provided survival time state counter.

According to certain embodiments, in case of a handover of the UE from the source network node, apparatus 10 may be controlled by memory 14 and processor 12 to receive QoS context from the source network node. According to an embodiment, apparatus 10 may be controlled by memory 14 and processor 12 to receive the information in one or more information element(s) within a HANDOVER REQUEST message in a handover procedure. Additionally, in an embodiment, apparatus 10 may be controlled by memory 14 and processor 12 to receive the TSCAI information in the information element(s) from the source network node in case of handover.

In an embodiment, the information element(s) may include a PDU Session Resources To Be Setup List, that contains an item per PDU session, PDU Session Resources To Be Setup Item. According to one embodiment, each of these items may contain the QoS Flows To Be Setup List, which itself has one item per QoS flow: QoS Flows To Be Setup Item.

In an embodiment, for example in case of SPS, apparatus 10 may be controlled by memory 14 and processor 12 to select a slot that is suited to maintain the PDB and receive the messages exactly at the expected deterministic timing using the survival time end.

Fig. 7b illustrates an example of an apparatus 20 according to another embodiment. In an embodiment, apparatus 20 may be a node or element in a communications network or associated with such a network, such as a UE, mobile equipment (ME), mobile station, mobile device, stationary device, IoT device, or other device. As described herein, UE may alternatively be referred to as, for example, a mobile station, mobile equipment, mobile unit, mobile device, user device, subscriber station, wireless terminal, tablet, smart phone, IoT device, sensor or NB-IoT device, or the like. As one example, apparatus 20 may be implemented in, for instance, a wireless handheld device, a wireless plug-in accessory, or the like.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in Fig. 7b.

As illustrated in the example of Fig. 7b, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), applicationspecific integrated circuits (ASICs), and processors based on a multi-core processor architecture, as examples. While a single processor 22 is shown in Fig. 7b, multiple processors may be utilized according to other example embodiments. For example, it should be understood that, in certain embodiments, apparatus 20 may include two or more processors that may form a multiprocessor system (e.g., in this case processor 22 may represent a multiprocessor) that may support multiprocessing. In some embodiments, the multiprocessor system may be tightly coupled or loosely coupled (e.g., to form a computer cluster).

Processor 22 may perform functions associated with the operation of apparatus 20 including, as some non-limiting examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and/or for transmitting via an uplink from apparatus 20. According to certain embodiments, apparatus 20 may further include a transceiver 28 configured to transmit and receive information. In one example, the transceiver 28 may also include a radio interface (e.g., a modem) coupled to the antenna 25. In some embodiments, the radio interface may correspond to a plurality of radio access technologies including one or more of GSM, LTE, LTE-A, 5G, NR, WLAN, NB-IoT, Bluetooth, BT-LE, NFC, RFID, UWB, and the like. In further example embodiments, the radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other example embodiments, transceiver 28 may be capable of transmitting and receiving signals or data directly. Additionally or alternatively, in some embodiments, apparatus 20 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR.

According to some embodiments, processor 22 and/or memory 24 may be included in or may form a part of processing circuitry or control circuitry. In addition, in some embodiments, transceiver 28 may be included in or may form a part of transceiving circuitry.

As discussed above, according to some embodiments, apparatus 20 may be a UE, mobile device, mobile station, ME, IoT device and/or NB-IoT device, for example. According to certain embodiments, apparatus 20 may be controlled by memory 24 and processor 22 to perform the functions associated with example embodiments described herein. For example, in some embodiments, apparatus 20 may be configured to perform one or more of the processes depicted in any of the flow charts or signaling diagrams described herein, such as those illustrated in Fig. 5, Fig. 6a, Fig. 6b, and/or Fig. 6c. In certain embodiments, apparatus 20 may include or represent a UE and may be configured to perform a procedure relating to survival time monitoring for TSC, for instance.

In certain embodiments, apparatus 20 may be controlled by memory 24 and processor 22 to receive a message from a serving network node to trigger handover to a target network node. According to one example, the message may include a RRC reconfiguration message. In an embodiment, apparatus 20 may be controlled by memory 24 and processor 22 to switch to the new cell of the target network node. According to an embodiment, apparatus 20 may be controlled by memory 24 and processor 22 to transmit a reconfiguration complete message to the target network node, which may include the STS information, such as the survival time end and/or survival time status counters.

Therefore, certain example embodiments provide several technological improvements, enhancements, and/or advantages over existing technological processes and constitute an improvement at least to the technological field of wireless network control and management. For example, certain embodiments provide mechanisms to introduce survival time state (STS) information, e.g., as a PDU session/QoS flow functionality, to leverage the STS in the AN for QoS enhancement, and to introduce STS in the handover context (among QoS Context). One embodiment may be configured to monitor the failure to deliver packets within the PDB and to define for the monitoring new QoS flow context information. This context information may be applied, for example, to select the link layer parameters for the transmission following a failure. Accordingly, the use of certain example embodiments results in improved functioning of communications networks and their nodes, such as base stations, eNBs, gNBs, and/or UEs or mobile stations.

In some example embodiments, the functionality of any of the methods, processes, signaling diagrams, algorithms or flow charts described herein may be implemented by software and/or computer program code or portions of code stored in memory or other computer readable or tangible media, and executed by a processor.

In some example embodiments, an apparatus may be included or be associated with at least one software application, module, unit or entity configured as arithmetic operation(s), or as a program or portions of it (including an added or updated software routine), executed by at least one operation processor. Programs, also called program products or computer programs, including software routines, applets and macros, may be stored in any apparatus-readable data storage medium and may include program instructions to perform particular tasks.

A computer program product may include one or more computer-executable components which, when the program is run, are configured to carry out some example embodiments. The one or more computer-executable components may be at least one software code or portions of code. Modifications and configurations for implementing the functionality of an example embodiment may be performed as routine(s), which may be implemented as added or updated software routine(s). In one example, software routine(s) may be downloaded into the apparatus.

As an example, software or computer program code or portions of code may be in source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus, for example through the use of an application specific integrated circuit (ASIC), a programmable gate array (PGA), a field programmable gate array (FPGA), or any other combination of hardware and software. In yet another example embodiment, the functionality may be implemented as a signal, such as a non-tangible means, that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity variations, and alternative constructions would be apparent, while remaining within the scope of the claims.

A first embodiment may be directed to a method may include monitoring communication service availability for one or more TSN applications in a 5GS using at least one of STS information, TSCAI, and/or a QoS profile. The method may also include selecting link layer configurations based on the at least one of the STS information, TSCAI, and/or the QoS profile.

In a variant, the STS information may include survival time, survival timer, survival time end, and/or survival time state counters, for example. According to a variant, the QoS profile may include 5QI and/or a PDB value. In some variants, the monitoring may include using the survival time, the TSCAI and the QoS profile (e.g., the PDB value), to characterize the communication service availability on the application level in the 5GS. In a variant, the monitoring may include dynamically monitoring the status of packet delivery with respect to the survival time window since one or more previous unsuccessful packet deliveries.

According to a variant, given a packet periodicity, the monitoring may include translating a survival time into the form of a count of packets or traffic periods, as described in terms of TSC deterministic traffic TSCAI parameters. In a variant, where a message is anticipated to be received with a periodicity of $T_p$ at a defined latest point in time, a survival time of $T_s$ would allow for a maximum permissible consecutive loss of $m$ messages according to: $m = \lfloor T_s / T_p \rfloor$, with $\lfloor \vee \rfloor$ denoting the rounding to the greatest integer less than or equal to x, and therefore the survival time may be: $T_s >= m * T_p$.

In some variants, a survival timer, $T_{s,timer}$, may define a countdown timer that is set to the survival time triggered by a packet loss. According to a variant, the survival timer may define the maximum window to successfully traffic periods, as described in terms of TSC deterministic traffic TSCAI parameters. In a variant, where a message is anticipated to be received with a periodicity of $T_p$ at a defined latest point in time, a survival time of $T_s$ would allow for a maximum permissible consecutive loss of $m$ messages according to: $m = \lfloor T_s / T_p \rfloor$, with $\lfloor \vee \rfloor$ denoting the rounding to the greatest integer less than or equal to x, and therefore the survival time may be: $T_s >= m * T_p$.

In some variants, a survival timer, $T_{s,timer}$, may define a countdown timer that is set to the survival time triggered by a packet loss. According to a variant, the survival timer may define the maximum window to successfully deliver a packet of the periodic message sequence before the communication service is considered unavailable. In a variant, after such successful delivery of a packet, the survival timer may be stopped. According to another variant, when the survival timer reaches zero, then the communication service is considered unavailable. Therefore, according to a variant, the monitoring may include starting a survival timer, stopping the survival timer when a packet is successfully delivered or considering the communication service as unavailable when the survival timer reaches zero.

In a variant, after receiving a negative acknowledgement (NACK) for a packet, the method may include setting the survival timer to the survival time corrected for the time between the expected delivery at the UE egress (DS-TT) or RAN ingress (NW-TT) and setting the time that the survival timer is started according to the following formula: $T_{PDCPtimedelta}$ = Starting time of Survival Timer - Expected Arrival Time of the Lost Packet. Thus, in some variants, the method may include setting the survival timer to: $T_{s,timer, PDCP} = T_s - T_{PDCPtimedelta}$. In a further variant, the method may include expressing the survival time for a transmission as an absolute point in time for latest delivery of the next message as the survival time end: $T_{s,end}$ = Expected Arrival Time of the Lost Packet + $T_s$.

In a variant, the expected arrival time of a lost packet for a given period can be calculated from the TSCAI and the feedback from lower layers to the PDCP on the unsuccessful delivery of the packet. According to a variant, when the delivery of another packet of this TSC QoS flow is later than the survival timer end, the service is considered unavailable. Alternatively or additionally, in a variant, the number of consecutive lost packets may be counted for TSC periodic traffic.

According to certain variants, a survival time state may be expressed, for example, as an up-counter or down-counter. For instance, in a variant, a survival time state up-counter may be set to be equal to consecutive packet loss count, and/or a survival time state down-counter may be set to be equal to *m* - consecutive packet loss count. In another variant, the survival time state may be expressed as a fraction or percentage of the maximum tolerable packet loss counter. For example, in a variant, the survival time state % = 100% * consecutive packet loss count / (m - 1) with $\mathrm{m}= \lfloor T_s / T_p \rfloor$. In a variant, the method may include increasing the survival time state for every PDCP packet that is expected for periodic TSC traffic but is signaled as error to PDCP. In one variant, if the state is larger than 100%, the service is considered unavailable.

In certain variants, a minimum time between packet losses may be used where, for example, STS information may include information on last survival time packet. In one variant, this minimum time may be expressed as a time value based on the periodicity value or a number of periods.

According to certain variants, the method may include using the STS information, such as the survival timer, survival time end or survival time state counters, when delivering packets from a UPF to a gNB and/or within RAN to lower layers to express a level of urgency. For example, in one variant, the level of urgency may be used to perform possible actions or determine whether to perform certain actions, such as configuring MCS, duplication, retransmission, etc. In a variant, the method may include carrying the STS information via new information elements that may be provided at the interfaces and state machines, e.g., in the UPF or PDCP layer. In one variant, the method may include receiving an acknowledgement of receipt of a packet, which may also include information about meeting of the PDB.

In some variants, the method may also include, for example when initiating a handover of a UE to a target network node, providing the STS information to the target network node. For example, in a variant, the providing may include informing at least the target network node using a new information element about the remaining time for the next successful transmission in terms of a survival time end or a survival time state counter. In one variant, the format of the providing procedure may depend on the synchronization of the network nodes and the scheduling scheme.

According to a variant, for a fully synchronized system, the survival time end may contain the full information together with the 5QI QoS and TSCAI.

In a variant, the providing may include providing a handover latency to be added on top of the provided survival time state counter.

According to certain variants, in case of a handover, the providing may also include transferring QoS context to the target network node. In some variants, to the QoS context, the state information on survival time may be added. According to one variant, the providing may include providing the information in one or more information element(s) within a HANDOVER REQUEST message in a handover procedure. Additionally, in a variant, the providing may further include transferring the TSCAI information in the information element(s) to the target network node in case of handover.

In a variant, the information element(s) may include a PDU Session Resources To Be Setup List, that contains an item per PDU session, PDU Session Resources To Be Setup Item. According to a variant, each of these items may contain, among other elements, the QCI and the QoS flow level QoS parameters IE and, for GBR QoS flows, the IE may also contain the GBR QoS flow information with detailed information on the QoS parameters like the guaranteed flow bitrate uplink/downlink. In a further variant, the IE included in the HANDOVER REQUEST may also contain the additional survival time state information for the respective TSC QoS flow. Additionally, in a variant, the IE may also include the TSCAI, which may also be transferred in the HANDOVER REQUEST message.

A second embodiment is directed to a method that may include receiving a message, for example, from a source gNB initiating handover of a UE. The message may include at least STS information. The method may also include determining, based at least on the received STS information, the urgency and required link layer configuration so that survival time is not exceeded.

In a variant, the STS information may include survival time, survival timer, survival time end, and/or survival time state counters, for example.

According to a variant, the receiving may include receiving a new information element about the remaining time for the next successful transmission in terms of survival time end or a survival time state counter. In a variant, for a fully synchronized system, the message may include the STS information together with the 5QI QoS and/or TSCAI. In another variant, the receiving may include receiving a handover latency, which may be added on top of the provided survival time state counter.

According to certain variants, in case of a handover of the UE from the source network node, the receiving may also include receiving QoS context from the source network node. According to a variant, the receiving may include receiving the information in one or more information element(s) within a HANDOVER REQUEST message in a handover procedure. Additionally, in a variant, the receiving may further include receiving the TSCAI information in the information element(s) from the source network node in case of handover.

In a variant, the information element(s) may include a PDU Session Resources To Be Setup List, that contains an item per PDU session, PDU Session Resources To Be Setup Item. According to a variant, each of these items may contain the QoS Flows To Be Setup List, which itself has one item per QoS flow: QoS Flows To Be Setup Item.

In a variant, for example in case of SPS, the method may include selecting a slot that is suited to maintain the PDB and receive the messages exactly at the expected deterministic timing using the survival time end.

A third embodiment is directed to a method that may include receiving a message from a serving network node to trigger handover to a target network node. According to one example, the message may include a RRC reconfiguration message. The method may then include switching to the new cell of the target network node. The method may also include transmitting a reconfiguration complete message to the target network node, which includes the STS information, such as the survival time end and/or survival time status counters

A fourth embodiment is directed to an apparatus including at least one processor and at least one memory comprising computer program code. The at least one memory and computer program code may be configured, with the at least one processor, to cause the apparatus at least to perform the method according to the first embodiment, the second embodiment, the third embodiment, and/or any other embodiments discussed herein, or any of the variants described above.

A fifth embodiment is directed to an apparatus that may include circuitry configured to perform the method according to the first embodiment, the second embodiment, the third embodiment, and/or any other embodiments discussed herein, or any of the variants described above.

A sixth embodiment is directed to an apparatus that may include means for performing the method according to the first embodiment, the second embodiment, the third embodiment, and/or any other embodiments discussed herein, or any of the variants described above.

A seventh embodiment is directed to a non-transitory computer readable medium comprising program instructions stored thereon for performing at least the method according to the first embodiment, the second embodiment, the third embodiment, and/or any other embodiments discussed herein, or any of the variants described above.

## Claims

1. A source network node associated with time sensitive communications in LTE, 5G or NR communication system comprising:

   means for monitoring packet delivery status for at least one time sensitive network application in a system using at least one of survival time state information, time sensitive communication assistance information, and a quality of service profile (600); and
   means for selecting link layer configurations based on at least one of the survival time state information, the time sensitive communication assistance information, and the quality of service profile (610),
   **characterized in that** the source network node further comprises:

   means for providing the survival time state information to a target network node, when initiating a handover (620),
   wherein the survival time state information comprises at least one of survival timer, survival time end, and survival time state counters.

2. The source network node according to claim 1, wherein the quality of service profile comprises at least one of a quality of service indicator and a packet delay budget value.

3. The source network node according to claim 1 or 2, wherein the survival timer defines a countdown timer that is set to the survival time triggered by a packet loss or defines a maximum window to successfully deliver a packet of a periodic message sequence before the communication service is considered unavailable.

4. The source network node according to claim 1, 2 or 3, further comprising:
   means for monitoring the packet delivery status with respect to the survival timer or the survival time window dynamically since one or more previous unsuccessful packet deliveries.

5. The source network node according to any one of claims 2-4, further comprising:

means for translating the survival time into a form of a count of packets or traffic periods given a packet periodicity.

6. The source network node according to any one of claims 2-5, further comprising:

   means for starting the survival timer;
   means for stopping the survival timer when a packet is successfully delivered; and
   means for determining, based at least on the survival time state information, a required link layer configuration so that survival time is not exceeded.

7. A target network node associated with time sensitive communications in LTE, 5G or NR communication system comprising:

   means for receiving a message from a source network node initiating handover of a user equipment wherein the message comprises a survival time state information (630), wherein the survival time state information comprises at least one of survival timer, survival time end, and survival time state counters; and
   means for determining, based at least on the survival time state information, a required link layer configuration so that the survival time is not exceeded (640).

8. The target network node according to claim 7, further comprising:
   means for receiving, retrieving or calculating a handover latency, which is added on top of the provided survival time state counters.

9. The target network node according to claim 7 or 8, further comprising:
   means for receiving time sensitive communication assistance information in at least one information element within a handover request message in a handover procedure.

10. The target network node according to claim 9, wherein the handover request message comprises a handover cause value of time sensitive communication handover and wherein the cause value indicates a request for a dedicated scheduling of next packet within a dedicated time limit.

11. The target network node according to any one of claims 7-10, further comprising:

    means for selecting a slot that is suited to maintain a packet delay budget using a survival time end in case of semi-persistent scheduling; and
    means for receiving packets at expected deterministic timing or before the timing when using a hold-and-forward-buffer.

12. The target network node according to any one of claims 7-10, further comprising:

    means for selecting a slot that is suited to maintain a packet delay budget using a survival time end in case of semi-persistent scheduling; and
    means for transmitting packets to the user equipment at expected deterministic timing or before the timing when using a hold-and-forward-buffer.

13. The source or the target network node according to any one of claims 1-12, wherein the survival time state information comprises a minimum time between packet losses and the minimum time is expressed as a time value based on a periodicity value or a number of periods.

14. A user equipment, UE, associated with time sensitive communications in LTE, 5G or NR communication system, comprising:

    means for receiving a reconfiguration message from a serving network node to trigger handover to a target network node (650);
    means for switching to a new cell of the target network node (660); and
    means for transmitting a reconfiguration complete message (670) to the target network node,
    **characterized in that** the reconfiguration complete message comprises a survival time state information for packet delivery status of at least one of sent uplink packets or received downlink packets,
    wherein the survival time state information comprises at least one of survival timer, survival time end, and survival time state counters.

15. The user equipment, UE, according to claim 14, wherein the reconfiguration message is a radio resource control message.

**Patentansprüche**

1. Quellnetzwerkknoten, der mit einer zeitsensitiven Kommunikation in einem LTE-, einem 5G- oder einem NR-Kommunikationssystem verknüpft ist und Folgendes umfasst:

Mittel zum Überwachen eines Paketzustellungsstatus für mindestens eine zeitsensitive Netzwerkanwendung in einem System unter Verwendung von mindestens einem von Überlebenszeitzustandsinformationen, zeitsensitiven Kommunikationsunterstützungsinformationen und einem Dienstqualitätsprofil (600); und
Mittel zum Auswählen von Verbindungsschichtauslegungen auf Basis von mindestens einem der Überlebenszeitzustandsinformationen, der zeitsensitiven Kommunikationsunterstützungsinformationen und des Dienstqualitätsprofils (610),
**dadurch gekennzeichnet, dass** der Quellnetzwerkknoten ferner Folgendes umfasst:

Mittel zum Bereitstellen der Überlebenszeitzustandsinformationen für einen Zielnetzwerkknoten beim Initiieren einer Übergabe (620),
wobei die Überlebenszeitzustandsinformationen mindestens eines von einem Überlebenstimer, einem Überlebenszeitende und von Überlebenszeitzustandszählern umfassen.

2. Quellnetzwerkknoten nach Anspruch 1, wobei das Dienstqualitätsprofil mindestens eines von einem Dienstqualitätsindikator und einem Paketverzögerungsbudgetwert umfasst.

3. Quellnetzwerkknoten nach Anspruch 1 oder 2, wobei der Überlebenstimer einen Countdowntimer definiert, der auf die Überlebenszeit eingestellt ist, die von einem Paketverlust ausgelöst wird, oder ein maximales Fenster für eine erfolgreiche Zustellung eines Pakets einer periodischen Nachrichtensequenz definiert, bevor der Kommunikationsdienst als nicht verfügbar betrachtet wird.

4. Quellnetzwerkknoten nach Anspruch 1, 2 oder 3, der ferner Folgendes umfasst:
Mittel zum dynamischen Überwachen des Paketzustellungsstatus mit Bezug auf den Überlebenstimer oder das Überlebenszeitfenster seit einer oder mehreren vorherigen erfolglosen Paketzustellungen.

5. Quellnetzwerkknoten nach einem der Ansprüche 2 bis 4, der ferner Folgendes umfasst:
Mittel zum Übersetzen der Überlebenszeit in eine Form einer Zählung von Paketen oder Verkehrsperioden, denen eine Paketperiodizität gegeben ist.

6. Quellnetzwerkknoten nach einem der Ansprüche 2 bis 5, der ferner Folgendes umfasst:

Mittel zum Starten des Überlebenstimers;
Mittel zum Stoppen des Überlebenstimers, wenn ein Paket erfolgreich zugestellt wurde; und
Mittel zum Bestimmen einer erforderlichen Verbindungsschichtauslegung mindestens auf Basis der Überlebenszeitzustandsinformationen, derart, dass eine Überlebenszeit nicht überschritten wird.

7. Zielnetzwerkknoten, der mit einer zeitsensitiven Kommunikation in einem LTE-, einem 5G- oder einem NR-Kommunikationssystem verknüpft ist und Folgendes umfasst:

Mittel zum Empfangen einer Nachricht von einem Quellnetzwerkknoten, der eine Übergabe einer Teilnehmereinrichtung initiiert, wobei die Nachricht Überlebenszeitzustandsinformationen (630) umfasst, wobei die Überlebenszeitzustandsinformationen mindestens eines von einem Überlebenstimer, einem Überlebenszeitende und von Überlebenszeitzustandszählern umfassen; und
Mittel zum Bestimmen einer erforderlichen Verbindungsschichtauslegung mindestens auf Basis der Überlebenszeitzustandsinformationen, derart, dass die Überlebenszeit nicht überschritten wird (640).

8. Zielnetzwerkknoten nach Anspruch 7, der ferner Folgendes umfasst:

Mittel zum Empfangen, Abrufen oder Berechnen einer Übergabelatenz, die zu den bereitgestellten Überlebenszeitzustandszählern hinzugefügt wird.

9. Zielnetzwerkknoten nach Anspruch 7 oder 8, der ferner Folgendes umfasst:
Mittel zum Empfangen von zeitsensitiven Kommunikationsunterstützungsinformationen in mindestens einem Informationselement in einer Übergabeanforderungsnachricht in einer Übergabeprozedur.

10. Zielnetzwerkknoten nach Anspruch 9, wobei die Übergabeanforderungsnachricht einen Übergabeursachenwert einer zeitsensitiven Kommunikationsübergabe umfasst und wobei der Ursachenwert eine Anforderung einer dedizierten Planung eines nächsten Pakets innerhalb einer dedizierten Zeitgrenze anzeigt.

11. Zielnetzwerkknoten nach einem der Ansprüche 7 bis 10, der ferner Folgendes umfasst:

Mittel zum Auswählen eines Schlitzes, der im Falle einer semipersistenten Planung zum Beibehalten eines Paketverzögerungsbudgets unter Verwendung eines Überlebenszeitendes geeignet ist; und
Mittel zum Empfangen von Paketen zu einem erwarteten deterministischen Timing oder vor dem Timing, wenn ein Halten-und-Weiterleiten-Puffer verwendet wird.

12. Zielnetzwerkknoten nach einem der Ansprüche 7 bis 10, der ferner Folgendes umfasst:

Mittel zum Auswählen eines Schlitzes, der im Falle einer semipersistenten Planung zum Beibehalten eines Paketverzögerungsbudgets unter Verwendung eines Überlebenszeitendes geeignet ist; und
Mittel zum Übertragen von Paketen zur Teilnehmereinrichtung zu einem erwarteten deterministischen Timing oder vor dem Timing, wenn ein Halten-und-Weiterleiten-Puffer verwendet wird.

13. Quell- oder Zielnetzwerkknoten nach einem der Ansprüche 1 bis 12, wobei die Überlebenszeitzustandsinformationen eine Mindestzeit zwischen Paketverlusten umfassen und die Mindestzeit als ein Zeitwert auf Basis eines Periodizitätswertes oder einer Anzahl von Perioden ausgedrückt wird.

14. Teilnehmereinrichtung, UE, die mit einer zeitsensitiven Kommunikation in einem LTE-, einem 5G- oder einem NR-Kommunikationssystem verknüpft ist und Folgendes umfasst:

Mittel zum Empfangen einer Neuauslegungsnachricht von einem bedienenden Netzwerkknoten, um eine Übergabe an einen Zielnetzwerkknoten auszulösen (650);
Mittel zum Umschalten auf eine neue Zelle des Zielnetzwerkknotens (660); und
Mittel zum Übertragen einer Neuauslegungsabschlussnachricht (670) zum Zielnetzwerkknoten,
**dadurch gekennzeichnet, dass** die Neuauslegungsabschlussnachricht Überlebenszeitzustandsinformationen für einen Paketzustellungsstatus von mindestens einem von gesendeten Uplinkpaketen oder empfangenen Downlinkpaketen umfasst,
wobei die Überlebenszeitzustandsinformationen mindestens eines von einem Überlebenstimer, einem Überlebenszeitende und von Überlebenszeitzustandszählern umfassen.

15. Teilnehmereinrichtung, UE, nach Anspruch 14, wobei die Neuauslegungsnachricht eine Funkressourcensteuernachricht ist.

**Revendications**

1. Noeud de réseau source associé à des communications sensibles au temps dans un système de communication LTE, 5G ou NR, comprenant :

des moyens pour surveiller un statut de distribution de paquets pour au moins une application réseau sensible au temps dans un système utilisant au moins un élément parmi des informations d'état de temps de survie, des informations d'assistance à la communication sensible au temps et un profil de qualité de service (600) ; et
des moyens pour sélectionner des configurations de couche de liaison sur la base d'au moins un élément parmi les informations d'état de temps de survie, les informations d'assistance à la communication sensible au temps et le profil de qualité de service (610),
**caractérisé en ce que** le noeud de réseau source comprend en outre :

des moyens pour fournir les informations d'état de temps de survie à un noeud de réseau cible, lors de l'initiation d'un transfert intercellulaire (620),

dans lequel les informations d'état de temps de survie comprennent au moins l'un de compteurs de temporisateur de survie, de fin de temps de survie et d'état de temps de survie.

2. Noeud de réseau source selon la revendication 1, dans lequel le profil de qualité de service comprend au moins un parmi un indicateur de qualité de service et une valeur de budget de retard de paquet.

3. Noeud de réseau source selon la revendication 1 ou 2, dans lequel le temporisateur de survie définit un temporisateur de compte à rebours qui est réglé sur le temps de survie déclenché par une perte de paquet, ou définit une fenêtre maximale pour une distribution réussie d'un paquet d'une séquence de messages périodiques avant que le service de communication ne soit considéré comme indisponible.

4. Noeud de réseau source selon la revendication 1, 2 ou 3, comprenant en outre :
des moyens pour surveiller de manière dynamique le statut de distribution de paquets par rapport au temporisateur de survie ou à la fenêtre de temps de survie depuis l'échec d'une ou plusieurs distributions de paquets précédentes.

5. Noeud de réseau source selon l'une quelconque des revendications 2 à 4, comprenant en outre :
des moyens pour traduire le temps de survie sous la forme d'un compte de paquets ou de périodes de trafic, compte tenu d'une périodicité de paquets.

6. Noeud de réseau source selon l'une quelconque des revendications 2 à 5, comprenant en outre :

des moyens pour démarrer le temporisateur de survie ;
des moyens pour arrêter le temporisateur de survie lorsqu'un paquet est distribué avec succès ; et
des moyens pour déterminer, sur la base au moins des informations d'état de temps de survie, une configuration de couche de liaison requise de sorte qu'un temps de survie ne soit pas dépassé.

7. Noeud de réseau cible associé à communications sensibles au temps dans système de communication LTE, 5G ou NR comprenant :

des moyens pour recevoir un message d'un noeud de réseau source initiant le transfert intercellulaire d'un équipement utilisateur, dans lequel le message comprend des informations d'état de temps de survie (630), dans lequel les informations d'état de temps de survie comprennent au moins l'un de compteurs de temporisateur de survie, de fin de temps de survie et d'état de temps de survie ; et
des moyens pour déterminer, sur la base au moins des informations d'état de temps de survie, une configuration de couche de liaison requise de sorte que le temps de survie ne soit pas dépassé (640).

8. Noeud de réseau cible selon la revendication 7, comprenant en outre :
des moyens pour recevoir, récupérer ou calculer une latence de transfert intercellulaire, qui est ajoutée en haut des compteurs d'état de temps de survie fournis.

9. Noeud de réseau cible selon la revendication 7 ou 8, comprenant en outre :
des moyens pour recevoir des informations d'assistance à la communication sensible au temps dans au moins un élément d'information dans un message de demande de transfert intercellulaire au cours d'une procédure de transfert intercellulaire.

10. Noeud de réseau cible selon la revendication 9, dans lequel le message de demande de transfert intercellulaire comprend une valeur de cause de transfert intercellulaire d'un transfert intercellulaire de communication sensible au temps, et dans lequel la valeur de cause indique une demande d'un ordonnancement dédié d'un paquet suivant avec dans une limite de temps dédiée.

11. Noeud de réseau cible selon l'une quelconque des revendications 7 à 10, comprenant en outre :

des moyens pour sélectionner un créneau qui est adapté au maintien d'un budget de retard de paquets en utilisant une fin de temps de survie en cas d'ordonnancement semi-persistant ; et
des moyens pour recevoir des paquets à un moment déterministe prévu ou avant ce moment lors de l'utilisation d'une mémoire tampon de type "hold-and-forward".

**12.** Noeud de réseau cible selon l'une quelconque des revendications 7 à 10, comprenant en outre :

> des moyens pour sélectionner un créneau qui est adapté au maintien d'un budget de retard de paquets en utilisant une fin de temps de survie en cas d'ordonnancement semi-persistant ; et
> des moyens pour transmettre des paquets à l'équipement utilisateur à un moment déterministe prévu ou avant ce moment lors de l'utilisation d'une mémoire tampon de type "hold-and-forward".

**13.** Source ou Noeud de réseau cible selon l'une quelconque des revendications 1 à 12, dans lequel les informations d'état de temps de survie comprennent un temps minimum entre les pertes de paquets, et le temps minimum est exprimé comme une valeur temporelle basée sur une valeur de périodicité ou un nombre de périodes.

**14.** Équipement utilisateur, UE, associé à des communications sensibles au temps dans un système de communication LTE, 5G ou NR, comprenant :

> des moyens pour recevoir d'un noeud de réseau de desserte un message de reconfiguration pour déclencher un transfert intercellulaire vers un noeud de réseau cible (650) ;
> des moyens pour passer à une nouvelle cellule du noeud de réseau cible (660) ; et
> des moyens pour transmettre un message d'achèvement de reconfiguration (670) au noeud de réseau cible, **caractérisé en ce que** le message d'achèvement de reconfiguration comprend des informations d'état de temps de survie pour un statut de distribution de paquets d'au moins un élément parmi des paquets de liaison montante envoyés ou des paquets de liaison descendante reçus,
> dans lequel les informations d'état de temps de survie comprennent au moins l'un de compteurs de temporisateur de survie, de fin de temps de survie et d'état de temps de survie.

**15.** Équipement utilisateur, UE, selon la revendication 14, dans lequel le message de reconfiguration est un message de contrôle de ressources radio.

FIG. 1

FIG. 2

Per QoS flow TSCAI parameters + QoS parameters (PDB)
to describe deterministic traffic

Ingress of
the RAN

Egress of
the UE

Bridge A

DS-TT — UE1

PDU Session 1A

UPF-A — NW-TT

TSN
Bridge/End
Station

DS-TT

PDU Session 1B

UPF-B — NW-TT

TSN
Bridge/End
Station

DS-TT — UE2

PDU Session 2B

Bridge B

TSN
System

## FIG. 3

Period n     Period n+1

$T_p$

Data Burst

$t_{ingress}$(NW-TT)

$t_{burstarrival}$

$t_{PacketDelay}$

Expected Arrival Time at Receiver (Burst Arrival Time + PDB)

$t_{egress}$(DS-TT)

$t_{egress}$(n)

$t_{egress}$(n) after forward-and-hold buffering in DS-TT

## FIG. 4

| UE | Source gNB | | Target gNB |
|---|---|---|---|

*1. HANDOVER REQUEST*

Admission Control

*2. HANDOVER REQUEST ACKNOWLEDGE*

*3. RRCReconfiguration*

Switch to New Cell

*4. RRCRecongifurationComplete*

# FIG. 5

| 600 |
|---|
| Monitoring communication service availability for one or more TSN applications |

| 610 |
|---|
| Selecting link layer configurations based on the STS information, TSCAI, and/or the QoS profile |

| 620 |
|---|
| Providing the STS information to the target network node, when initiating handover |

## FIG. 6A

| 630 |
|---|
| Receiving a message including STS information from a source network node |

| 640 |
|---|
| Determining the urgency and required link layer configuration so that survival time is not exceeded |

| 645 |
|---|
| Selecting a slot that is suited to maintain the PDB and receive the messages at the expected deterministic timing using the survival time end |

## FIG. 6B

650

Receiving a message from a serving
network node to trigger handover
to a target network node

660

Switching to the new cell of
the target network node

670

Transmitting a reconfiguration
complete message

# FIG. 6C

15

10

Memory

12

14

Processor

18

Transceiver

FIG. 7A

70

25

20

Memory

22

24

Processor

28

Transceiver

FIG. 7B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **HUAWEI.** HoT QoS support over NG. *3GPP DRAFT; R3-194051, XP051770249," and ""3rd Generation Partnership Project; Technical Specification Group Services and System Aspects; System architecture for the 5G System (5GS); Stage 2 (Release 16)", 3GPP STANDARD TS 23.501,* 22 December 2019, vol. SA WG2 (V16.3.0), 1-417